# DEMANDE DE BREVET EUROPEEN

(11) **EP 0 756 114 A1**
(43) Date de publication de la demande: **29.01.1997**
(21) Numéro de dépôt: 96420233.7
(22) Date de dépôt: 05.07.1996
(51) Int. Cl.: F16J 15/08

(54) **joint de culasse pour moteur à combustion interne**

(30) Priorité: 26.07.1995 FR 9509345
(71) Demandeur: CURTY PAYEN S.A., F-69800 Saint-Priest, Rhône (FR)
(72) Inventeur: Chaucesse, Pierre-Yves, 69260 Charbonnieres Les Bains (FR); Jargeaix, Gérard, 69003 Lyon (FR)
(74) Mandataire: Maureau, Philippe

(57) **Abrégé**

Joint du type comprenant une âme (12) constituée par une tôle comportant des ouvertures correspondant respectivement aux chambres de combustion (13), aux passages d'huile, aux passages de liquide de refroidissement, et aux passages des goujons de serrage de la culasse sur le bloc moteur, et dont les deux faces sont équipées de cordons souples pour réaliser l'étanchéité aux liquides.

Selon I'invention, l'étanchéité autour des chambres de combustion (13) est réalisée par des anneaux de feu constitués par deux tôles (18) fixées sur les deux faces de l'âme du joint, et dont chacune présente, vue en coupe par un plan diamétral aux chambres de combustion, une succession d'ondulations (19, 20), le sommet des ondulations servant de zones d'appui de la tôle, d'une part, sur l'âme du joint et, d'autre part, sur la culasse (15) ou sur le bloc moteur (16), le nombre des zones d'appui (19) sur la culasse ou sur le bloc moteur étant au moins égal à deux, et étant supérieur au nombre de zones d'appui (20) sur l'âme (12) du joint.

## Description

La présente invention a pour objet un joint de culasse pour moteur à combustion interne.

Un joint de culasse vise à réaliser l'étanchéité entre le bloc moteur et la culasse, cette étanchéité devant être obtenue tant vis-à-vis des chambres de combustion que des passages d'huile de lubrification du moteur, des passages de liquides de refroidissement du moteur, tout en permettant le passage de goujons de serrage de la culasse sur le bloc moteur. Cette étanchéité doit pouvoir être réalisée sur une plage de températures suffisamment large, compte tenu de la température élevée du moteur en cours de fonctionnement, tenir compte des tolérances de fabrication de la culasse et du bloc moteur, et posséder une bonne fiabilité dans le temps.

L'étanchéité est plus particulièrement difficile à obtenir pour les moteurs à taux de compression élevée, tels que les moteurs diesel. En effet, si dans un moteur à essence le taux de compression (rapport entre les volumes de la chambre de combustion dans les positions extrêmes haute et basse du piston) est de l'ordre de 9 à 10, ce taux de compression peut atteindre vingt dans le cas d'un moteur diesel.

Dans un tel cas, compte tenu de la valeur élevée de ce taux de compression, dans laquelle intervient l'épaisseur du joint de culasse, il est nécessaire de disposer d'un joint de culasse d'épaisseur très précise, adapté le mieux possible au moteur, pour tenir compte des tolérances de hauteur des pistons et d'autres facteurs, tels que rectification de la culasse résultant d'une réfection du moteur.

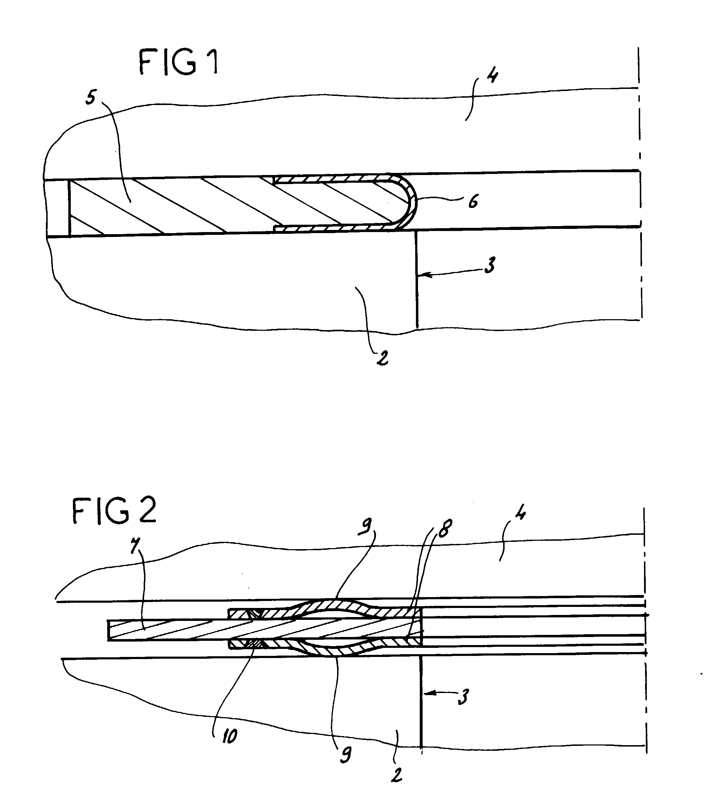

La figure 1 représente une vue en coupe transversale d'une partie de joint de culasse au niveau d'une chambre de combustion. Sur cette figure, le bloc est désigné par la référence 2, la chambre par la référence 3 et la culasse par la référence 4. Entre le bloc et la culasse est interposé un joint comportant une âme 5 constituée, par exemple, par une tôle perforée revêtue d'un carton contenant des fibres d'amiante ou d'autres fibres, telles que des fibres de verre, ou des fibres de matériaux synthétiques, telles que des fibres aramide, connues sous la dénomination KEVLAR. Au niveau de chaque chambre de combustion, l'âme du joint est équipée d'un anneau en acier 6 encore appelé anneau de feu, possédant une section en forme de fer à cheval, dont la partie centrale est située sur la périphérie de la chambre de combustion et dont les deux branches sont en appui respectivement contre le bloc moteur et contre la culasse. Outre le fait que l'amiante est un matériau insalubre, un tel joint de culasse n'est absolument pas susceptible de compenser des jeux, de telle sorte que les risques de fuite ne sont pas négligeables, et qu'il convient de fabriquer des joints de différentes épaisseurs pour satisfaire à différents blocs moteurs, même si la variation d'épaisseur exigée entre un joint et un autre est très faible.

La figure 2 est une vue similaire à la figure 1, dans laquelle les mêmes éléments sont désignés par les mêmes références que précédemment. Dans ce cas, le joint est constitué par une âme 7 métallique composée d'une ou plusieurs feuilles sur les faces externes de laquelle sont fixées des pièces en tôle 8 constitutives des anneaux de feu, dans les parties entourant les chambres de combustion. Chaque pièce en tôle 8 comporte une forme générale plane avec une ondulation centrale 9. La zone plane repose sur l'âme 7, avec fixation à l'aide de points de soudure 10, et l'ondulation 9 sert de zone d'appui contre la culasse. Pour obtenir le niveau d'étanchéité souhaité, il est nécessaire que la pression de la zone d'appui 9 sur la culasse soit importante. Il en résulte des risques de déformation et de détérioration de la zone sur laquelle l'ondulation prend appui, ce risque étant particulièrement important lorsqu'il s'agit d'une culasse en alliage léger.

Le but de l'invention est de fournir un joint de culasse pour moteur à combustion interne, qui assure une étanchéité à de hautes pressions, tout en ne détériorant pas les surfaces sur lesquelles le joint prend appui, c'est-à-dire le bloc moteur et la culasse.

A cet effet, le joint de culasse qu'elle concerne, du type comprenant une âme constituée par une tôle comportant des ouvertures correspondant respectivement aux chambres de combustion, aux passages d'huile, aux passages de liquide de refroidissement, et aux passages des goujons de serrage de la culasse sur le bloc moteur, et dont les deux faces sont équipées de cordons souples pour réaliser l'étanchéité aux liquides, est caractérisé en ce que l'étanchéité autour des chambres de combustion est réalisée par des anneaux de feu constitués par deux tôles fixées sur les deux faces de l'âme du joint, et dont chacune présente, vue en coupe par un plan diamétral aux chambres de combustion, une succession d'ondulations, le sommet des ondulations servant de zones d'appui de la tôle, d'une part, sur l'âme du joint et, d'autre part, sur la culasse ou sur le bloc moteur, le nombre des zones d'appui sur la culasse ou sur le bloc moteur étant au moins égal à deux, et étant supérieur au nombre de zones d'appui sur l'âme du joint.

Il résulte de cette structure que les ondulations permettent une capacité de déformation assurant, sous l'effet du serrage, une excellente étanchéité. Le nombre de zones d'appui sur la culasse ou sur le bloc moteur étant supérieur au nombre de zones d'appui sur l'âme métallique du joint, il se produit une répartition plus importante de la force de serrage sur les pièces sensibles, telles que la culasse ou le bloc moteur, que sur l'âme du joint, puisque le nombre de zones d'appui sur la culasse et le bloc moteur est supérieur au nombre de zones d'appui sur l'âme du joint. Si le serrage peut produire des dégradations, ces dégradations se trouveront sur l'âme du joint, ce qui n'a pas d'importance, et non pas sur le bloc moteur ou sur la culasse.

Suivant une forme d'exécution de ce joint de culasse, chaque tôle constitutive d'un anneau de feu comporte deux zones d'appui sur le bloc moteur ou sur la culasse, et une zone d'appui sur l'âme du joint.

Avantageusement, chaque tôle constitutive d'un anneau de feu comporte localement, des débords du côté opposé aux chambres de combustion, destinés à une fixation par soudage sur l'âme du joint.

Ce soudage est effectué par point dans des emplacements proches des zones d'étanchéité.

Suivant une autre caractéristique de l'invention, la tôle constitutive des anneaux de feu possède une épaisseur inférieure ou égale à environ 0,5 mm.

En outre, chaque tôle constitutive d'un anneau de feu est mise en forme par emboutissage.

Avantageusement, dans le cas d'un moteur comportant plusieurs chambres de combustion disposées en ligne, les différents anneaux de feu appartiennent à une pièce unique découpée dans une même tôle. Toutefois, en variante, les anneaux de feu peuvent être réalisés unitairement.

De toute façon, l'invention sera bien comprise à l'aide de la description qui suit, en référence au dessin schématique annexé représentant, à titre d'exemple non limitatif, une forme d'exécution de ce joint de culasse :
Figure 3 est une vue à plat de ce joint de culasse ;
Figure 4 est une vue à plat d'une plaque réunissant plusieurs anneaux de feu ;
Figure 5 est une vue en coupe transversale et à échelle agrandie d'une partie de ce joint.

Le joint de culasse représenté au dessin comprend une partie principale ou âme 12 constituée par une plaque-support en tôle ou en acier, comportant des ouvertures 13, au nombre de quatre, correspondant aux chambres de combustion du moteur. Cette plaque comporte également des ouvertures 14 servant au passage des goujons de serrage de la culasse 15 sur le bloc moteur 16, ainsi que des ouvertures 17 pour le passage du liquide de refroidissement et du liquide de lubrification du moteur. De façon connue en soi, l'étanchéité aux liquides est réalisée par l'intermédiaire de cordons 21 en matériau élastomère déposés sur les deux faces de la plaque 12.

Comme cela est montré notamment à la figure 5, l'étanchéité au gaz est réalisée, autour de chaque chambre de combustion 13, par l'intermédiaire de deux plaques 18 en tôle d'une épaisseur inférieure ou égale à environ 0,5 mm. Il peut s'agir également d'acier ou d'acier inoxydable dont la caractéristique essentielle est l'élasticité, qui doit permettre l'établissement de pressions de contact élevées en même temps qu'une adaptabilité aux mouvements des composants en regard lors du fonctionnement du moteur, soit typiquement un acier dont la limite à la rupture (passage en phase plastique lors du formage) est supérieure à 800 MPa. Chaque tôle 18 comporte, dans la zone destinée à assurer l'étanchéité, trois ondulations, à savoir deux ondulations 19 tournées d'un côté et une ondulation 20 disposée entre les deux ondulations 19 et tournée de l'autre côté. Comme montré au dessin, les deux ondulations 19 sont en appui pour l'une des tôles 18 contre la culasse, et pour l'autre tôle 18 contre le bloc moteur, tandis que l'ondulation 20 est, pour sa part, en appui contre la plaque 12 formant l'âme du joint.

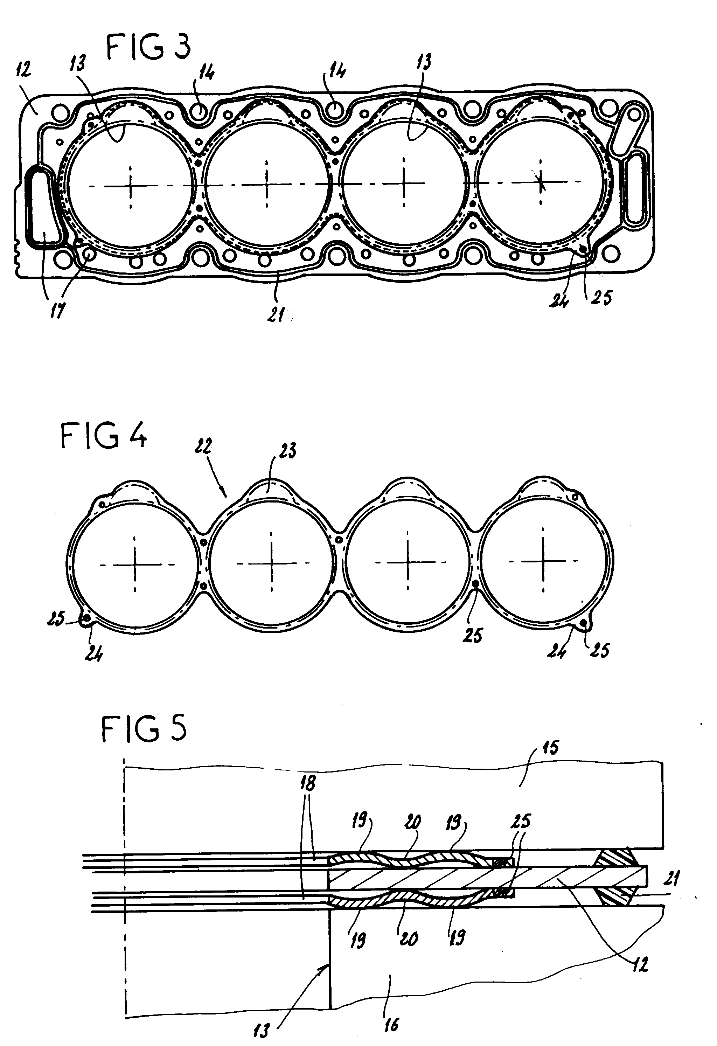

Dans le cas d'un moteur à quatre cylindres en ligne destiné à être équipé du joint selon l'invention, les éléments constitutifs des anneaux de feu sont obtenus par découpe à l'intérieur d'une même plaque 22, et sont solidaires les uns des autres, comme montré à la figure 4. Cette figure 4 représente une série d'anneaux de feu destinés à être fixés sur l'une des faces de la plaque centrale 12, étant précisé qu'il s'agit d'un joint destiné à un moteur diesel comportant, à cet effet, des languettes 23 destinées à être disposées en regard des préchambres de combustion. Chaque élément 22 comporte des oreilles 24 en débord destinées à la fixation de l'élément sur la plaque centrale 12 par des points de soudure désignés par la référence 25. Ces points de soudure sont extrêmement près des zones d'étanchéité. Il est également possible de prévoir certains points de soudure dans les zones comprises entre deux chambres de combustion voisines.

Il ressort de la structure de ce joint que si la force de serrage au niveau d'un anneau de feu possède une valeur F, cette force F va s'exercer en totalité par l'intermédiaire de l'ondulation 20 sur la plaque centrale 12, mais cette force ne sera que de F/2 pour chacune des ondulations 19 prenant appui sur la culasse ou sur le bloc moteur.

Comme il ressort de ce qui précède, l'invention apporte une grande amélioration à la technique existante en fournissant un joint de culasse pour moteur à combustion interne, susceptible d'assurer des étanchéités à de hautes pressions grâce à des valeurs de serrage élevées, sans que les forces de serrage ne détériorent des éléments sensibles, tels que le bloc moteur ou la culasse.

Comme il va de soi, l'invention ne se limite pas à la seule forme d'exécution de ce joint de culasse, décrite ci-dessus à titre d'exemple, elle en embrasse au contraire toutes les variantes. C'est ainsi notamment que le nombre d'ondulations de chaque anneau de feu pourrait être différent, l'essentiel étant que le nombre d'ondulations en appui contre la culasse ou le bloc moteur soit supérieur au nombre d'ondulations en appui contre la plaque centrale constitutive de l'âme du joint.

## Revendications

1. Joint de culasse pour moteur à combustion interne, du type comprenant une âme (12) constituée par une tôle comportant des ouvertures correspondant respectivement aux chambres de combustion (13), aux passages d'huile, aux passages de liquide de refroidissement, et aux passages des goujons de serrage de la culasse sur le bloc moteur, et dont les deux faces sont équipées de cordons souples pour réaliser l'étanchéité aux liquides, caractérisé en ce que l'étanchéité autour des chambres de combustion (13) est réalisée par des anneaux de feu constitués par deux tôles (18) fixées sur les deux faces de l'âme du joint, et dont chacune présente, vue en coupe par un plan diamétral aux chambres de combustion, une succession d'ondulations (19, 20), le sommet des ondulations servant de zones d'appui de la tôle, d'une part, sur l'âme du joint et, d'autre part, sur la culasse (15) ou sur le bloc moteur (16), le nombre des zones d'appui (19) sur la culasse ou sur le bloc moteur étant au moins égal à deux, et étant supérieur au nombre de zones d'appui (20) sur l'âme (12) du joint.

2. Joint de culasse selon la revendication 1, caractérisé en ce que chaque tôle (18) constitutive d'un anneau de feu comporte deux zones d'appui (19) sur le bloc moteur (16) ou sur la culasse (15), et une zone d'appui (20) sur l'âme (12) du joint.

3. Joint de culasse selon la revendication 1, caractérisé en ce que chaque tôle (18) constitutive d'un anneau de feu comporte localement, des débords (24) du côté opposé aux chambres de combustion, destinés à une fixation par soudage sur l'âme du joint.

4. Joint de culasse selon l'une quelconque des revendications 1 à 3, caractérisé en ce que la tôle (18) constitutive des anneaux de feu possède une épaisseur inférieure ou égale à environ 0,5 mm.

5. Joint de culasse selon l'une quelconque des revendications 1 à 4, caractérisé en ce que chaque tôle (18) constitutive d'un anneau de feu est mise en forme par emboutissage.

6. Joint de culasse selon l'une quelconque des revendications 1 à 5, caractérisé en ce que, dans le cas d'un moteur comportant plusieurs chambres de combustion disposées en ligne, les différents anneaux de feu appartiennent à une pièce unique (22) découpée dans une même tôle.
